# EUROPEAN PATENT APPLICATION

(11) **EP 2 921 644 A1**
(43) Date of publication of application: **23.09.2015**
(21) Application number: 15159234.2
(22) Date of filing: 16.03.2015
(51) Int. Cl.: E21D 15/51

(54) **VALVE**

(30) Priority: 18.03.2014 ZA 201401190
(71) Applicant: Mine Support Products (pty) Ltd, Vereeniging 1939 (ZA)
(72) Inventor: Nissen, Christian, 1939 Duncanville, Vereeniging (ZA)
(74) Representative: Patentanwälte Ruff, Wilhelm, Beier, Dauster & Partner

(57) **Abstract**

A valve which includes a flexible tube in an enclosure which is filled with pressurized gas which collapses the tube and wherein a fluid, applied at either end of the tube, can open the tube if the pressure of the fluid is sufficiently high.

## Description

### BACKGROUND OF THE INVENTION

This invention relates to a valve which is suitable for use with a hydraulically activated device such as a rock prop employed in an underground location.

In one type of rock prop water under pressure is used to set the prop so that it is brought to an operative condition as soon as possible at the time of installation. Typically the prop is positioned between a foot wall and an opposed hanging wall. After installation, if closure of the hanging wall towards the foot wall takes place, then the pressure of water inside the prop is increased and, to accommodate the hanging wall movement, water is released from the prop at a controlled rate.

In order to set a prop in the aforementioned manner water is introduced through a filler valve into an interior of the prop. When the source of pressurised water is disconnected from the prop interior, the filler valve automatically closes. It is possible to use the filler valve as a release valve to allow water under pressure to escape from the prop interior. Alternatively, a release valve designed for the purpose, is used.

Arduous conditions exist underground. Although filters and similar mechanisms can be used to remove particulate material from water which is to be used with a prop, it is quite possible that unwanted particles can be entrained in the water which is introduced into a prop. The problems which are posed by these particles when the prop is being set can normally be overcome. However, when a prop is under pressure and closure takes place then small quantities of water must be allowed to escape at a controlled rate from the prop to cater for the closure. The presence of foreign particles in the water escaping from a prop can adversely affect the functioning of a pressure release valve. For example, if a particle is lodged between a valve member and a valve seat then the valve member would normally not be able to seal and water would escape continuously from the prop which then would not be capable of exhibiting its designed load-bearing function.

An object of the present invention is to provide a valve which, to some extent at least, addresses the aforementioned situation.

### SUMMARY OF INVENTION

The invention provides a valve for use with a hydraulically activated device, wherein the valve includes a housing, a bore through the housing, the bore having an inner surface, an inlet to the bore, and an outlet from the bore, a tubular valve member which is made from a resiliently de-formable material and which is located in the bore, the tubular valve member including an outer surface, a first end, an opposed second end, and a passage through the valve member from the first end to the second end, a first seal between the first end of the tubular member and an opposed section of the inner surface of the bore, a second seal between the second end of the tubular member and an opposed section of the inner surface of the bore, and a filler arrangement, connected to the housing, to introduce a gas under pressure into a volume between the first seal and the second seal and between the outer surface of the tubular valve member and part of the opposed inner surface of the bore.

The filler arrangement may comprise a one-way valve.

The inlet to the bore may be used to introduce a liquid e.g. water under pressure into an interior of the device, e.g. a prop, to which the valve is connected. The outlet may be connected to the device, i.e. the prop, opposing an opening through a wall of the prop.

A retention device, e.g. a circlip, may be positioned inside the bore to restrict movement of the tubular valve member towards the inlet.

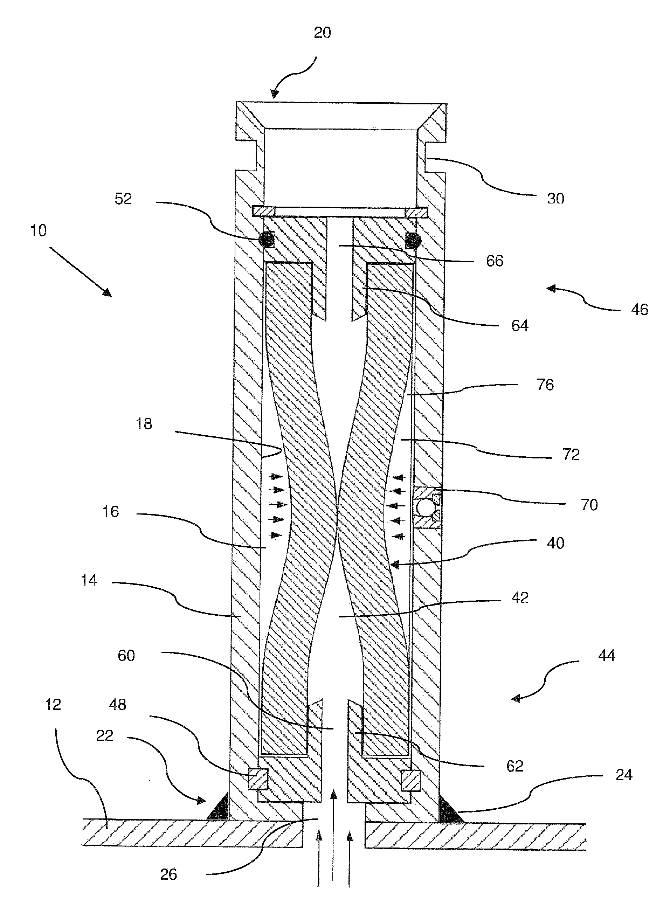

### BRIEF DESCRIPTION OF THE DRAWING

The invention is further described by way of example with reference to the accompanying drawing which illustrates from one side and in cross-section a valve according to one form of the invention.

### DESCRIPTION OF PREFERRED EMBODIMENT

The accompanying drawing illustrates from one side and in cross-section a valve 10 according to the invention, which is connected to a wall 12 of a hydraulically activated rock prop (not shown in detail).

The valve 10 includes a housing 14 through which extends a bore 16. The bore has an inner surface 18, an inlet 20 and an outlet 22. The housing is attached in any suitable way to the wall 12, for example by means of welding 24. The outlet 22 opposes an opening 26 in the wall so that the outlet is thereby placed in communication with an interior of the prop.

The housing 14, in an outer surface adjacent the inlet, is formed with a circumferentially extending slot 30, as is known in the art, so that a connection device, not shown, can be coupled to the housing. The connection device is at an end of a hose or conduit which extends from a pressurised source of water, not shown. This aspect is known in the art and therefore is not further described herein.

A tubular valve member 40 is located inside the bore 16. The valve member is made from a resiliently deformable material e.g. polyurethane or rubber. A passage 42 extends through the tubular valve member from a first end 44 to a second end 46.

A first seal 48 is coupled to the first end and defines a sealing interface between the inner surface 18 of the bore and the tubular valve member 40. Similarly a second seal 52 is engaged with the second end and defines a sealing interface between the inner surface 18 and the tubular valve member.

The first seal 48 has a passage 60 which extends through the seal and an adjacent tubular spigot 62 which extends into the passage 60. The second seal 52 is similar to the first seal and has a passage 66 which extends through the seal and an adjacent tubular spigot 64 which extends into the passage. Thus, flow of a liquid can take place through the passage 66 into the passage 42 and then into the passage 60.

A one-way filler valve 70 is connected to a side of the housing at a location which is between the first and second ends 44 and 46.

In use of the valve 10 a pressurised gas is introduced through the one-way filler valve 70 into a volume 72 which is defined between an outer surface of the tubular valve member 40 and an opposing part of the inner surface 18 of the bore and which is located between the first end 44 and the second end 46 of the tubular valve member. The pressure of the gas is sufficiently high to cause the tubular valve member to collapse so that the passage 42 between the first and second ends is effectively sealed.

The inlet 20 can be connected to a source of pressurised water, in the manner which has been described and water can then be passed through the inlet 20, and through the passage 66, in the second seal. If the incoming water has a pressure which is sufficiently high then the tubular valve member 40 is forced to move so that the passage is opened and water flows through the passage 42 in the valve member to the passage 60, to the outlet 22 and then into the opening 26 into the interior of the prop.

If the valve 10 is disconnected from the pressurised water source the gas pressure in the volume 72 is sufficiently high to cause the valve member to collapse and immediately seal.

If the pressure inside the prop increases above a designed limit, for example if closure takes place of a hanging wall and a foot wall between which the prop is installed, then an increased pressure is exerted at the outlet of the valve member. The pressure increases as the degree of closure increases and a point is reached at which the tubular valve member is forced open to allow a quantity of water to escape through the passage 42 to the surrounding environment. As the pressure reduces inside the prop the force exerted by the pressurised gas in the volume 72 causes the tubular valve member to close, again.

A principal benefit of the invention lies in the fact that the valve member is made from a resiliently deformable material such as rubber, polyurethane or the like. These materials are exemplary only and are non-limiting. If a particle carried by water exiting the prop is in the passage 42 when the tubular valve member closes then, because of the nature of the material from which the member is made, it is possible for the material to deform and accommodate the particle. It is unlikely that the particle, in itself, will cause the sealing action of the valve member to be impaired.

If the pressure in the prop is again increased then, in the manner described, the tubular valve member is opened and water can flow from the prop. In this event it is likely that the particle previously trapped inside the passage 42 would be flushed to the surrounding environment.

## Claims

1. A valve for use with a hydraulically activated device, wherein the valve includes a housing, a bore through the housing, the bore having an inner surface, an inlet to the bore, and an outlet from the bore, a tubular valve member which is made from a resiliently deformable material and which is located in the bore, the tubular valve member including an outer surface, a first end, an opposed second end, and a passage through the valve member from the first end to the second end, a first seal between the first end of the tubular member and an opposed section of the inner surface of the bore, a second seal between the second end of the tubular member and an opposed section of the inner surface of the bore, and a filler arrangement, connected to the housing, to introduce a gas under pressure into a volume between the first seal and the second seal and between the outer surface of the tubular valve member and part of the opposed inner surface of the bore.

2. A valve according to claim 1 wherein the filler arrangement includes a one-way valve.

3. A valve according to claim 1 or 2 wherein, in use, the outlet is connected to the device and a liquid is introduced from the inlet through the bore into an interior of the device.

4. A valve according to any one of claims 1 to 3 wherein a retention device is positioned inside the bore to restrict movement of the tubular valve member at least towards the inlet.

5. A valve according to claim 4 wherein the retention device is a circlip.

6. A valve according to any one of claims 1 to 5 wherein, in use, application of a pressurised liquid, at a pressure above a predetermined level, to the first end of the tubular valve member, causes the tubular valve member to move so that the passage is opened.

7. A valve according to any one of claims 1 to 5 wherein, in use, application of a pressurised liquid at a pressure above a predetermined level, to the second end, of the tubular valve member, causes the tubular valve member to move so that the passage is opened.
